# FASCICULE DE BREVET EUROPEEN

(11) **EP 2 148 108 B1**
(45) Date de publication et mention de la délivrance du brevet: **27.04.2011**
(21) Numéro de dépôt: 09290566.0
(22) Date de dépôt: 15.07.2009
(51) Int. Cl.: F16D 23/14

(54) **Système compact d'actionnement de l'embrayage d'un véhicule automobile par l'intermédiaire d'un diaphragme**
Kompaktes Ausrückssystem einer Kupplung eines Kraftfahrzeugs mit einer Tellerfeder
Compact system for actuating the clutch of an automobile by means of a diaphragm

(30) Priorité: 17.07.2008 FR 0804126
(43) Date de publication de la demande: 27.01.2010
(73) Titulaire: SNR Roulements, 74000 Annecy (FR)
(72) Inventeur: Berthier, Julien, 74410 Saint-Jorioz (FR); Beauprez, Jean-Michel, 74270 Menthonnex sous Clermont (FR); Bouvard, Sébastien, 74000 Annecy (FR); Morel, Bertrand, 74910 Challonges (FR)
(74) Mandataire: Sayettat, Julien Christian

(56) Documents cités:
- FR-A- 2 879 700
- GB-A- 1 468 845
- US-A1- 2004 154 895

## Description

L'invention concerne un système d'actionnement de l'embrayage d'un véhicule automobile par l'intermédiaire d'un diaphragme, ledit système comprenant une butée et un dispositif de déplacement axial de ladite butée relativement audit diaphragme.

En particulier, le dispositif de déplacement axial de la butée peut être à commande hydraulique, notamment au moyen d'un piston, comme par exemple les dispositifs dénommés à commande concentrique hydraulique (CSC pour Concentric Slave Cylinder en anglais).

FR-A-2879700 décrit un système selon le préambule de la revendication 1.

Le document GB-1468 845 concerne un embrayage à friction pour véhicule automobile et un ensemble pour un tel embrayage avec une butée de débrayage.

Selon une réalisation connue, la butée d'embrayage comprend une bague extérieure tournante et une bague intérieure fixe qui sont pourvues chacune d'une piste de roulement formant entre elles un chemin de roulement à contact oblique dans lequel des corps roulants sont disposés pour guider la rotation de ladite bague tournante. En outre, la bague tournante présente une portée radiale d'actionnement et la bague fixe présente une portée radiale de montage de la butée sur le piston.

Ainsi, le piston permet le déplacement axial de la butée depuis une position d'embrayage dans laquelle la portée d'actionnement est disposée contre le diaphragme vers une position de débrayage dans laquelle ladite portée d'actionnement appuie sur le diaphragme.

L'invention vise à perfectionner l'art antérieur en proposant un système d'actionnement de l'embrayage d'un véhicule automobile par l'intermédiaire d'un diaphragme, ledit système intégrant une butée d'embrayage qui est agencée pour améliorer la compacité axiale dudit système afin de pouvoir réduire la distance axiale entre le diaphragme et la boite de vitesses.

A cet effet, l'invention propose un système d'actionnement de l'embrayage d'un véhicule automobile selon la revendication 1.

D'autres objets et avantages de l'invention apparaîtront dans la description qui suit faite en référence aux figures annexées qui sont des vues partielles en coupe longitudinale d'un système d'actionnement selon respectivement un mode de réalisation de l'invention.

En relation avec ces figures, on décrit ci-dessous un système d'actionnement de l'embrayage d'un véhicule automobile par l'intermédiaire d'un diaphragme 1. Dans une telle réalisation, le débrayage est réalisé par appui sur le diaphragme 1 par l'intermédiaire d'une butée d'embrayage. Pour ce faire, le système d'actionnement comprend un dispositif de déplacement axial de la butée entre une position d'embrayage et une position de débrayage.

Dans les modes de réalisation représentés, le dispositif de déplacement comprend un piston 2 dont l'extrémité est schématisée sur les figures, ledit piston étant actionnable hydrauliquement en déplacement axial. Par exemple, le piston 2 est intégré dans un dispositif de déplacement de type à commande concentrique hydraulique.

La butée d'embrayage comprend une bague extérieure 3 tournante autour d'une bague intérieure 4 fixe en rotation, lesdites bagues étant réalisées en tôle emboutie pour présenter chacune une piste de roulement formant entre elles un chemin de roulement. En variante non représentée, la bague extérieure peut être fixe et la bague intérieure tournante.

La bague 4 fixe en rotation est destinée à être déplacée en translation axiale par l'intermédiaire du piston hydraulique 2 du dispositif de déplacement depuis la position d'embrayage (représentée sur les figures) vers la position de débrayage dans le sens S. Pour ce faire, la butée comprend une portée radiale de montage 5 de ladite butée sur le piston 2, ladite portée de montage étant solidaire de la bague fixe 4.

Dans la description, les termes de positionnement dans l'espace sont pris en référence à l'axe de rotation de la butée (horizontal sur les figures qui montre un côté de la coupe, l'autre côté étant symétrique par rapport audit axe). En particulier, le terme « intérieur » est relatif à une disposition proche de cet axe et le terme « extérieur » est relatif à une disposition à distance de cet axe. Par ailleurs, les termes « avant » et « arrière » sont relatifs à une disposition par rapport au sens S de déplacement de la butée vers la position de débrayage, à savoir à gauche sur les figures pour avant et à droite pour arrière. Enfin, comme on le verra dans la suite de la description, les cotes axiales sont mesurées suivant le sens S de déplacement de la butée vers la position de débrayage.

Le chemin de roulement est à contact oblique dans le sens d'application de l'effort de déplacement de la butée en position de débrayage, des corps roulants formés de billes 6 étant disposés dans ledit chemin pour guider la rotation de la bague extérieure 3 et pour transmettre les efforts exercés sur chacune des bagues 3, 4.

Sur les figures, la bague intérieure 4 comprend une portée radiale avant qui forme la portée de montage 5 et une portée axi-radiale 7 sur laquelle la piste de roulement est formée. En outre, le système d'actionnement comprend un dispositif d'autocentrage qui exerce, dans le sens opposé à celui du déplacement de la butée vers sa position de débrayage, un effort axial de mise en appui de la portée de montage 5 sur l'extrémité du piston 2.

La bague intérieure 4 est montée sur un support 8, par exemple réalisé en tôle emboutie, par l'intermédiaire d'une rondelle élastique 9, par exemple une rondelle de type Belleville ou une rondelle comprenant une pluralité d'ondes axiales, de sorte à générer l'effort d'autocentrage entre le support 8 et la butée.

Le support 8 représenté comprend une portée radiale 10 qui est en appui sur l'extrémité du piston 2, ladite portée radiale étant prolongée de part et d'autre par une portée axiale respectivement avant 11 et arrière 12. Par ailleurs, le diamètre de la portée arrière 12 est supérieur à celui de la portée avant 11, ladite portée arrière permettant l'emmanchement du support 8 sur le piston 2.

Pour réaliser l'association de la portée de montage 5 sur l'extrémité du piston, la rondelle 9 est d'une part en appui sur la face avant de la portée de montage 5 par l'intermédiaire de son bord extérieur et d'autre part en blocage axial contre un repli radial 13 de la portée axiale avant 11 par l'intermédiaire de son bord intérieur. Ainsi, la face arrière de la portée de montage 5 est mise en appui sur l'extrémité du piston 2 avec interposition de la portée radiale 10.

Par ailleurs, un jeu radial 14 est formé entre l'extrémité intérieure de la portée de montage 5 et la portée axiale avant 11 de sorte à permettre l'autocentrage par déplacement axial relatif de la butée relativement au piston 1.

Le système d'actionnement comprend également une portée radiale d'actionnement 15 qui est solidaire de la bague tournante 3, le piston 2 permettant le déplacement de la butée depuis la position d'embrayage dans laquelle la portée d'actionnement 15 est disposée contre le diaphragme 1 vers une position de débrayage dans laquelle ladite portée d'actionnement appuie sur ledit diaphragme.

Ainsi, en position d'embrayage, la portée 15 peut être disposée en précharge contre le diaphragme 1 sans exercer un effort d'appui suffisant pour le débrayage et, en position de débrayage, la portée 15 appuie sur ledit diaphragme pour l'actionner.

Le système comprend en outre un moyen de précontrainte formé d'un ressort 16 qui exerce un effort axial de précharge sur la bague fixe 4, de sorte que la portée d'actionnement 15 en position d'embrayage soit disposée contre le diaphragme 1. Pour ce faire, la butée comprend une armature 17 qui est solidaire de la bague fixe 4, ladite armature présentant une couronne d'appui 18 de l'extrémité avant du ressort 16.

Sur les figures, la bague extérieure 3 comprend une portée radiale avant qui forme la portée d'actionnement 15 et une portée axi-radiale 19 sur laquelle la piste de roulement est formée. Par ailleurs, le diaphragme 1 comprend des doigts 20 et la portée d'actionnement 15 présente une zone d'appui 21 desdits doigts qui s'étend annulairement sur ladite portée d'actionnement. Dans les modes de réalisation représentés, la zone d'appui 21 est plane et les doigts 20 présentent une zone torique d'appui. En variante, la zone d'appui des doigts 20 peut présenter une géométrie plane et la zone d'appui 21 de la portée d'actionnement 15 une géométrie torique.

Pour améliorer la compacité du système d'actionnement, la cote axiale A de la portée d'actionnement 15 est inférieure ou égale à la cote axiale M de la portée de montage 5. Ainsi, le diaphragme 1 peut être rapproché axialement de la boite de vitesses, notamment en ce que l'extrémité du piston 2 et donc une partie avant de la butée sont disposées axialement à l'intérieur du diaphragme 1. En particulier, l'écart entre les cotes axiales A, M peut être compris entre 2 et 4 mm.

Sur les figures, le diamètre de la zone d'appui 21 est supérieur au diamètre de la piste de roulement de la bague extérieure 3, la portée d'actionnement 15 étant alors disposée autour du chemin de roulement. Plus précisément, les centres des corps roulants 6 sont contenus dans un plan axial, la cote axiale P dudit plan étant comprise entre la cote axiale A de la portée d'actionnement 15 et la cote axiale M de la portée de montage 5.

Cette disposition permet d'améliorer la compacité axiale de la butée mais induit un décalage radial des doigts 20 du diaphragme 1 par rapport aux réalisations suivant l'art antérieur. Or, ce décalage peut nécessiter une augmentation de l'ordre de 10 % de la force d'appui nécessaire pour actionner ledit diaphragme. Pour tolérer cette augmentation des efforts transmis, ainsi que pour améliorer la compacité de la butée, on peut prévoir d'utiliser des corps roulants 6 dont le diamètre est inférieur à 5 mm.

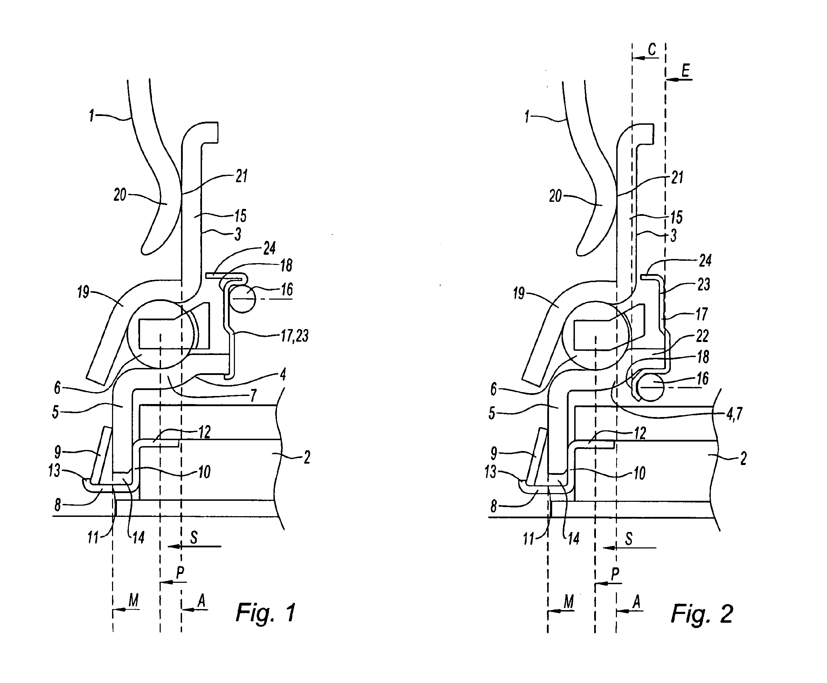

Par ailleurs, toujours pour améliorer la compacité du système, le mode de réalisation selon la figure 2 prévoit que la cote axiale C de la couronne d'appui 18 soit supérieure ou égale à la cote axiale minimale E de la bague fixe 4. Plus précisément, l'armature 17 est associée sur l'extrémité arrière de la bague fixe 4, la cote minimale E étant alors celle de ladite extrémité. Ainsi, la cote C de la couronne d'appui 18 est agencée pour que ladite couronne soit décalée vers l'avant par rapport à la bague fixe 4, de sorte que l'extrémité du ressort 16 soit disposée axialement à l'intérieur de la butée. En outre, cette réalisation permet la réduction de la distance axiale entre la portée d'actionnement 15 et la couronne d'appui 18, et donc la réduction de la distance axiale entre le diaphragme 1 et le ressort 16.

Sur la figure 2, l'extrémité arrière de la bague fixe 4 comprend une portée 22 sensiblement axiale sur la face intérieure de laquelle une portée axiale de l'armature 17 est emmanchée, la couronne d'appui 18 étant formée par un prolongement annulaire radial de ladite portée axiale. Dans cette réalisation, la couronne d'appui 18 et donc l'extrémité du ressort 16 sont disposées à l'intérieur de la bague intérieure 4.

En outre, l'armature 17 comprend une portée 23 sensiblement radiale qui est disposée en regard axial du chemin de roulement, de sorte à former déflecteur vis-à-vis de la pollution dudit chemin de roulement. En particulier, la portée radiale 23 peut s'étendre radialement au delà du chemin de roulement, en présentant un repli avant 24 de fermeture qui forme une chicane.

En variante du mode de réalisation de la figure 2, la couronne d'appui 18 peut être disposée à l'extérieur de la bague intérieure 4, par exemple en prévoyant que la portée radiale 23 présente une couronne d'appui 18 décalée axialement vers le chemin de roulement. Ainsi, le diamètre primitif du ressort 16 peut être supérieur au diamètre primitif de la butée.

La figure 1 représente un mode de réalisation dans lequel l'armature 17 présente une partie intérieure d'emmanchement sur l'extrémité arrière de la bague fixe 4, et une portée radiale 23 sur laquelle la couronne d'appui 18 est formée. Toutefois, dans cette réalisation, la couronne d'appui 18 n'est pas décalée axialement, les cotes axiales de ladite couronne et de l'extrémité arrière de la bague fixe 4 étant sensiblement égales.

## Revendications

1. Système d'actionnement de l'embrayage d'un véhicule automobile par l'intermédiaire d'un diaphragme (1), ledit système comprenant une butée présentant une bague tournante (3) et une bague fixe (4) pourvues chacune d'une piste de roulement formant entre elles un chemin de roulement à contact oblique dans lequel des corps roulants (6) sont disposés pour guider la rotation de ladite bague tournante, ledit système comprenant une portée radiale d'actionnement (15) qui est solidaire de ladite bague tournante et un dispositif de déplacement axial (2) de ladite butée depuis une position d'embrayage dans laquelle la portée radiale d'actionnement (15) est disposée contre le diaphragme (1) vers une position de débrayage dans laquelle ladite portée radiale d'actionnement appuie sur le diaphragme (1), ladite butée comprenant en outre, solidaire de ladite bague fixe (4), une portée radiale de montage (5) de ladite butée sur le dispositif de déplacement axial (2), un dispositif d'autocentrage (9) qui exerce, dans le sens opposé à celui du déplacement de la butée vers sa position de débrayage, un effort axial de mise en appui de la portée de montage (5) sur le dispositif de déplacement (2) ledit système d'actionnement étant **caractérisé en ce que** la cote axiale (A) de la portée radiale d'actionnement (15) est inférieure ou égale à la cote axiale (M) de la portée radiale de montage (5), lesdites cotes étant mesurées suivant le sens (S) de déplacement de la butée vers sa position de débrayage.

2. Système d'actionnement selon la revendication 1, **caractérisé en ce que** le dispositif d'autocentrage comprend une rondelle élastique (9) qui est en appui sur une face de la portée de montage (5), la face axialement opposée de ladite portée étant en appui sur le dispositif de déplacement (2).

3. Système d'actionnement selon la revendication 1 ou 2, **caractérisé en ce que** le dispositif de déplacement comprend un piston (2) sur l'extrémité duquel la portée de montage (5) est associée.

4. Système d'actionnement selon l'une quelconque des revendications 1 à 3, **caractérisé en ce que** les centres des corps roulants (6) sont contenus dans un plan axial, la cote axiale (P) dudit plan étant comprise entre la cote axiale (A) de la portée d'actionnement (15) et la cote axiale (M) de la portée de montage (5).

5. Système d'actionnement selon l'une quelconque des revendications 1 à 4, **caractérisé en ce que** la bague tournante (3) intègre la portée d'actionnement (15).

6. Système d'actionnement selon l'une quelconque des revendications 1 à 5, **caractérisé en ce que** le diamètre de la zone d'appui (21) de la portée d'actionnement (15) est supérieur au diamètre de la piste de roulement de la bague extérieure (3).

7. Système d'actionnement selon la revendication 6, **caractérisé en ce que** le diamètre des corps roulants (6) est inférieur à 5 mm.

8. Système d'actionnement selon l'une quelconque des revendications 1 à 7, **caractérisé en ce qu'**il comprend en outre un moyen de précontrainte (16) qui exerce un effort axial sur la bague fixe (4), de sorte que la portée d'actionnement (15) en position d'embrayage soit disposée contre le diaphragme (1).

9. Système d'actionnement selon la revendication 8, **caractérisé en ce que** la butée comprend une armature (17) solidaire de la bague fixe (4), ladite armature présentant une couronne d'appui (18) du moyen de précontrainte (16).

10. Système d'actionnement selon la revendication 9, **caractérisé en ce que** la cote axiale (C) de la couronne d'appui (18) est supérieure ou égale à la cote axiale minimale (E) de la bague fixe (4), lesdites cotes étant mesurées suivant le sens (S) de déplacement de la butée vers sa position de débrayage.

11. Système d'actionnement selon la revendication 9 ou 10, **caractérisé en ce que** l'armature (17) comprend une portée (23) qui est disposée en regard axial du chemin de roulement.

## Claims

1. System for actuating the clutch of an automobile by means of a diaphragm (1), said system comprising a stop having a rotating ring (3) and a fixed ring (4) each provided with a raceway forming between them an angular contact rolling path wherein rolling bodies (6) are arranged to guide the rotation of said rotating ring, said system comprising a radial actuating seating (15) which is integral with said rotating ring and an axial displacement system (2) of said stop from an engaging position wherein the radial actuating seating (15) is arranged against the diaphragm (1) towards a disengaging position wherein said radial actuating seating press on the diaphragm (1), said stop further comprising, integral with said fixed ring (4), a radial mounting seating (5) of said stop on the axial displacement device (2), and a self-centring device. (9) that exerts, in the direction opposite that of the displacement of the stop towards its disengaging position, an axial force for pressing against the mounting seating (5) on the displacement device (2), said actuating system being **characterised in that** the axial measurement (A) of the radial actuating seating (15) is less than or equal to the axial measurement (M) of the radial mounting seating (5), said measurements being measured according to the direction (S) of displacement of the stop towards its disengaging position.

2. Actuating system according to claim 1, **characterised in that** the self-centring device comprises an elastic washer (9) which presses against a face of the mounting seating (5), with the face axially opposite said seating being pressed against the displacement device (2).

3. Actuating system according to claim 1 or 2, **characterised in that** the displacement system comprises a piston (2) on the end of which the mounting seating (5) is associated.

4. Actuating system according to any of claims 1 to 3, **characterised in that** the centres of the rolling bodies (6) - are contained in an axial plane, the axial measurement (P) of said plane being between the axial measurement (A) of the actuating seating (15) and the axial measurement (M) of the mounting seating (5).

5. Actuating system according to any of claims 1 to 4, **characterised in that** the rotating ring (3) incorporates the actuating seating (15).

6. Actuating system according to any of claims 1 to 5, **characterised in that** the diameter of the pressing area (21) of the actuating seating (15) is greater than the diameter of the raceway of the outside ring (3).

7. Actuating system according to claim 6, **characterised in that** the diameter of the rolling bodies (6) is less than 5 mm.

8. Actuating system according to any of claims 1 to 7, **characterised in that** it further comprises a pre-stressing means (16) that exerts an axial force on the fixed ring (4), in such a way that the actuating seating (15) in engaging position is arranged against the diaphragm (1).

9. Actuating system according to claim 8, **characterised in that** the stop comprises an armature (17) integral with the fixed ring (4), said armature having a bearing rim (18) of the pre-stressing means (16).

10. Actuating system according to claim 9, **characterised in that** the axial measurement (C) of the bearing rim (18) is greater than or equal to the minimum axial measurement (E) of the fixed ring (4), said measurements being measured according to the direction (S) of displacement of the stop towards its disengaging position.

11. Actuating system according to claim 9 or 10, **characterised in that** the armature (17) comprises a seating (23) which is arranged axially opposite the rolling path.

## Patentansprüche

1. System zur Betätigung der Kupplung eines Kraftfahrzeugs mit Hilfe einer Membran (1), wobei das System ein Lager umfasst, das einen drehbaren Ring (3) und einen festen Ring (4) aufweist, die jeweils mit einer Rollbahn versehen sind, die zwischen sich einen Rollweg mit schrägem Kontakt bilden, in dem rollende Körper (6) angebracht sind, um die Drehung des drehbaren Rings zu führen, wobei das System einen radialen Betätigungsumfang (15) umfasst, der fest mit dem drehbaren Ring verbunden ist, und eine Vorrichtung zur axialen Verschiebung (2) des Lagers aus einer Kupplungsposition, in der radiale Betätigungsumfang (15) gegen die Membran (1) angebracht ist, in eine Auskupplungsposition, in der radiale Betätigungsumfang auf der Membran (1) aufliegt, wobei das Lager außerdem, fest mit der dem festen Ring (4) verbunden, einen radialen Montageumfang (5) des Lagers auf der Vorrichtung zur axialen Verschiebung (2) und eine Vorrichtung zur Selbstzentrierung (9) aufweist, die, in der der Richtung der Verschiebung des Lagers in seine Auskupplungsposition entgegengesetzten Richtung, eine axiale Kraft zur Auflage des Montageumfangs (5) auf die Vorrichtung zur Verschiebung (2) ausübt, wobei das System zur Betätigung **dadurch gekennzeichnet ist, dass** die axiale Seite (A) des radialen Betätigungsumfangs (15) geringer als oder gleich wie die axiale Seite (M) des radialen Montageumgangs (5) ist, wobei die Seiten in der Richtung (S) der Verschiebung des Lagers in seine Auskupplungsposition gemessen werden.

2. Betätigungssystem nach Anspruch 1, **dadurch gekennzeichnet, dass** die Vorrichtung zur Selbstzentrierung einen Federring (9) umfasst, der auf einer Seite des Montageumfangs (5) aufliegt, wobei die axial gegenüberliegende Seite des Umfangs auf der Vorrichtung zur Verschiebung (2) aufliegt.

3. Betätigungssystem nach Anspruch 1 oder 2, **dadurch gekennzeichnet, dass** die Vorrichtung zur Verschiebung einen Kolben (2) umfasst, auf dessen Ende der Montageumfang (5) assoziiert ist.

4. Betätigungssystem nach einem der Ansprüche 1 bis 3, **dadurch gekennzeichnet, dass** die Zentren der rollenden Körper (6) in einer axialen Ebene enthalten sind, wobei die axiale Seite (P) der Ebene zwischen der axialen Seite (A) des Betätigungsumfangs (15) und der axialen Seite (M) des Montageumfangs (5) enthalten ist.

5. Betätigungssystem nach einem der Ansprüche 1 bis 4, **dadurch gekennzeichnet, dass** der drehbare Ring (3) den Betätigungsumfang (15) einschließt.

6. Betätigungssystem nach einem der Ansprüche 1 bis 5, **dadurch gekennzeichnet, dass** der Durchmesser des Auflagebereichs (21) des Betätigungsumfangs (15) größer als der Durchmesser des Rollbahn des äußeren Rings (3) ist.

7. Betätigungssystem nach Anspruch 6, **dadurch gekennzeichnet, dass** der Durchmesser der rollenden Körper (6) kleiner als 5 mm ist.

8. Betätigungssystem nach einem der Ansprüche 1 bis 7, **dadurch gekennzeichnet, dass** es außerdem ein Mittel zum Vorspannen (16) umfasst, das eine axiale Kraft auf den festen Ring (4) ausübt, so dass der Betätigungsumfang (15) in der Kupplungsposition auf der Membran (1) aufliegt.

9. Betätigungssystem nach Anspruch 8, **dadurch gekennzeichnet, dass** das Lager ein Gestell (17) umfasst, das mit dem festen Ring (4) fest verbunden ist, wobei das Gestell eine Auflagekrone (18) des Mittels zur Vorspannung (16) aufweist.

10. Betätigungssystem nach Anspruch 9, **dadurch gekennzeichnet, dass** die axiale Seite (C) der Auflagekrone (18) größer als oder gleich wie die minimale axiale Seite (E) des festen Rings (4) ist, wobei die Seiten in der Richtung (S) der Verschiebung des Lagers in seine Auskupplungsposition gemessen werden.

11. Betätigungssystem nach Anspruch 9 oder 10, **dadurch gekennzeichnet, dass** das Gestell (17) einen Umfang (23) umfasst, der axial gegenüber dem Rollweg angebracht ist.
